# EUROPEAN PATENT APPLICATION

(11) **EP 4 503 217 A1**
(43) Date of publication of application: **05.02.2025**
(21) Application number: 23863449.7
(22) Date of filing: 05.09.2023
(51) Int. Cl.: H01M 10/04

(54) **ELECTRODE ASSEMBLY MANUFACTURING DEVICE AND MANUFACTURING METHOD USING SAME**

(30) Priority: 05.09.2022 KR 20220112122; 04.09.2023 KR 20230116652
(71) Applicant: LG Energy Solution, Ltd., Seoul 07335 (KR)
(72) Inventor: KEUM, Dongyeon, Daejeon 34122 (KR); SO, Heeyoung, Daejeon 34122 (KR); BAEK, Ju Hwan, Daejeon 34122 (KR); KIM, Jungwon, Daejeon 34122 (KR); JEONG, Dohwan, Daejeon 34122 (KR)
(74) Representative: Plasseraud IP
(86) International application number: PCT/KR2023/013205
(87) International publication number: WO 2024/053977

(57) **Abstract**

An electrode assembly manufacturing apparatus according to one embodiment of the present disclosure comprises a first separator supply unit that supplies a first separator sheet, a second separator supply unit that supplies a second separator sheet, a first electrode supply unit that supplies a plurality of first electrode pieces so as to be located between the first separator sheet and the second separator sheet, a lamination unit that forms a first electrode-separator assembly including a plurality of first electrode pieces located between the first separator sheet and the second separator sheet, a second electrode supply unit that supplies a plurality of second electrode pieces laminated so as to be located on the outer side surface of the separator of the first electrode-separator assembly, a stack unit on which an electrode assembly formed by laminating the first electrode-separator assembly and the second electrode piece is seated, and a holding unit that holds the second electrode piece and moves the second electrode piece to the stack unit.

## Description

### [TECHNICAL FIELD]

### Cross Citation with Related Application(s)

This application claims the benefit of Korean Patent Application No. 10-2022-0112122 filed on September 5, 2022 and Korean Patent Application No. 10-2023-0116652 filed on September 4, 2023 in the Korean Intellectual Property Office, the disclosures of which are incorporated herein by reference in their entirety.

The present disclosure relates to an electrode assembly manufacturing apparatus and a manufacturing method using the same, and more particularly, to an electrode assembly manufacturing apparatus which has improved productivity, and a manufacturing method using the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, being freely charged and discharged, and having very low self-discharge rate and high energy density.

The secondary battery may be classified based on the shape of a battery case into a cylindrical or prismatic battery in which an electrode assembly is built into a cylindrical or prismatic metal can, and a pouch-type battery in which the electrode assembly is built into a pouch-shaped case made of a stacked aluminum sheet.

Further, the secondary battery may be classified based on the structure of an electrode assembly having a structure in which a positive electrode and a negative electrode are stacked with a separator being interposed between the positive electrode and the negative electrode. Typically, there may be mentioned a jelly-roll (wound) type structure in which long sheet type positive electrodes and long sheet type negative electrodes are wound with a separator being interposed therebetween, a stacked (laminated) type structure in which pluralities of positive electrodes and negative electrodes, cut into predetermined unit sizes, are sequentially stacked with separators being interposed therebetween, or the like. In recent years, in order to solve problems caused by the jelly-roll type electrode assembly and the stacked type electrode assembly, there has been developed a stack/folding type electrode assembly, which is a combination of the jelly-roll type electrode assembly and the stacked type electrode assembly.

Meanwhile, in manufacturing a stacked type electrode assembly and a stack/folding type electrode assembly, conventionally, a method of preparing a plurality of bi-cells formed by sequentially laminating a negative electrode, a separator, and a positive electrode, laminating them, or attaching them to a sheet-like separator and then folding the sheet-like separator in one direction was used. However, such a conventional structure not only has complicated manufacturing procedures because the bi-cells are prepared in advance, and then attached onto the sheet-like separator and laminated, but also have a problem that an unnecessary gap space is created between the electrode and the separator because several layers of sheet-like separators are overlapped and disposed on the side surface of the final battery cell.

Furthermore, conventionally, in addition to such a lamination method, a manufacturing method of an electrode assembly using a zig-zag lamination method has also been used. The zig-zag lamination method is an electrode assembly lamination method in which the positive electrode and the negative electrode are alternately inserted during the process in which the separator unwound from a wound roll moves from one side to the other side and from the other side to one side. However, in the case of the conventional zigzag lamination method, there is a problem that the cut electrodes must be stored separately, and there is a risk that the inserted electrodes may move during the lamination process. In addition, when producing long battery cells, it is difficult to control the tension of the separator and the progress speed is slow, so that not only the manufacturing efficiency is reduced but also there is a limit to improving productivity,

Therefore, there is a need to develop a new electrode assembly manufacturing apparatus and method that can improve the manufacturing efficiency and productivity of the above-described stacked type or stack/folded type electrode assembly, and improve product durability and stability.

### [DETAILED DESCRIPTION OF THE INVENTION]

### [Technical Problem]

It is an object of the present disclosure to provide an electrode assembly manufacturing apparatus and a manufacturing method using the same which can improve manufacturing efficiency, product quality, and productivity as compared to conventional electrode assembly manufacturing processes.

The objects of the present disclosure are not limited to the foregoing objects, and any other objects and advantages not mentioned herein should be clearly understood by those skilled in the art from the following description and the accompanying drawing.

### [Technical Solution]

According to one embodiment of the present disclosure, there is provided an electrode assembly manufacturing apparatus comprising: a first separator supply unit that supplies a first separator sheet, a second separator supply unit that supplies a second separator sheet, a first electrode supply unit that supplies a plurality of first electrode pieces so as to be located between the first separator sheet and the second separator sheet, a lamination unit that forms a first electrode-separator assembly including a plurality of first electrode pieces located between the first separator sheet and the second separator sheet, a second electrode supply unit that supplies a plurality of second electrode pieces laminated so as to be located on the outer side surface of the separator of the first electrode-separator assembly, a stack unit on which an electrode assembly formed by laminating the first electrode-separator assembly and the second electrode piece is seated, and a holding unit that holds the second electrode piece and moves the second electrode piece to the stack unit.

The electrode assembly manufacturing apparatus may further comprise a moving unit that moves the first electrode-separator assembly in order to laminate the first electrode-separator assembly formed in the lamination unit onto the stack unit.

The moving unit may further comprise at least one roller that changes the moving direction of the first electrode-separator assembly.

The electrode assembly manufacturing apparatus may further comprise a transmission unit that moves a plurality of second electrode pieces supplied from the second electrode supply unit.

The electrode assembly manufacturing apparatus may further comprise a buffer table on which the second electrode piece located in the transmission unit is temporarily seated before moving the second electrode piece to the stack unit.

The buffer table comprises a first buffer table and a second buffer table, and the stack unit may be located between the first buffer table and the second buffer table.

The stack unit may move between the first buffer table and the second buffer table.

The stack unit may move on a straight line that forms the shortest distance between the first buffer table and the second buffer table when viewed in a plan view.

The holding unit may hold the second electrode piece seated on the buffer table while moving between the buffer table and the stack unit, and may move it to the stack unit.

The stack unit that has received transmission of the held second electrode piece may move in order to laminate the first electrode-separator assembly onto the stack unit.

The stack unit may move to be adjacent to the buffer table that is located farther from the stack unit among the buffer tables including a first buffer table and a second buffer table in order to laminate the first electrode-separator assembly, and the stack unit may be moved to be adjacent to the buffer table to thereby locate the first electrode-separator assembly on the uppermost second electrode piece of the stack unit.

The first electrode may be a negative electrode, and the second electrode may be a positive electrode.

According to another embodiment of the present disclosure, there is provided a manufacturing method of an electrode assembly, comprising the steps of: forming a first electrode-separator assembly that includes two sheet-like separators, and a plurality of first electrode pieces continuously located between inner side surfaces of the sheet-like separators facing each other; disposing a 1-1 electrode-separator assembly, which is part of the first electrode-separator assembly sheet, in a stack unit; laminating a 2-1 electrode piece on the outer side surface of the separator of the 1-1 electrode-separator assembly disposed in the stack unit; rotationally moving the stack unit to laminate the 1-2 electrode-separator assembly on the laminated 2-1 electrode piece; and laminating the 2-2 electrode piece on one surface of the 1-2 electrode separator assembly that is located on the opposite side to the surface of the 1-2 electrode separator assembly facing the 2-1 electrode piece.

The step of laminating the 2-1 electrode piece on the outer side surface of the separator of the 1-1 electrode-separator assembly disposed in the stack unit may comprise temporarily seating the second electrode piece supplied from the second electrode supply unit on a buffer table before moving the second electrode piece to the stack unit, and laminating the second electrode piece, in which a holding unit is temporarily seated on the buffer table, on the 1-1 electrode-separator assembly.

The buffer table may comprise a first buffer table and a second buffer table, and the stack unit may be disposed between the first buffer table and the second buffer table.

The step of rotationally moving the stack unit to laminate the 1-2 electrode-separator assembly on the laminated 2-1 electrode piece may be a step in which the stack unit moves between the first buffer table and the second buffer table, and the 1-2 electrode-separator assembly is stacked on the uppermost 2-1 electrode piece of the stack unit.

The 1-1 electrode-separator assembly and the 1-2 electrode-separator assembly may be connected to each other in a zigzag shape during the process of being disposed in the stack unit, and the 1-1 electrode-separator assembly and the 1-2 electrode-separator assembly may be in a state in which the plurality of first electrode pieces are laminated between the sheet-like separators.

### [Advantageous Effects]

According to embodiments, an electrode assembly manufacturing apparatus of the present disclosure and a manufacturing method using the same form a negative electrode-separator assembly in advance, and alternately laminate the negative electrode-separator assembly and the positive electrode piece, thereby being able to further improve productivity.

In addition, productivity can be further improved by forming the first electrode-separator assembly in a series of steps and then laminating it with the positive electrode piece.

Effects obtainable from the present disclosure may be not limited by the above mentioned effect. And, other unmentioned effects can be clearly understood from the following description and the accompany drawings by those having ordinary skill in the technical field to which the present disclosure pertains.

### [BRIEF DESCRIPTION OF THE DRAWINGS]

FIG. 1 is a perspective view showing an electrode assembly manufacturing apparatus according to an embodiment of the present disclosure.
FIG. 2 is a front view of the electrode assembly manufacturing apparatus of FIG. 1.
FIG. 3 is a plan view showing the moving state of the positive electrode piece in the electrode assembly manufacturing apparatus of FIG. 1.
FIGS. 4 and 5 are side views showing the operation of the electrode assembly manufacturing apparatus of FIG. 1.
FIG. 6 is a diagram illustrating a method of manufacturing a negative electrode-separator assembly that is inserted in an electrode assembly manufacturing apparatus according to an embodiment of the present disclosure.
FIG. 7 is a side view showing a negative electrode-separator assembly manufactured through the manufacturing method of FIG. 6.
FIG. 8 is a side view showing the electrode assembly of a section A of FIG. 5, which is an electrode assembly manufactured by an electrode assembly manufacturing apparatus according to an embodiment of the present disclosure.
FIG. 9 is a side view of an electrode assembly manufacturing apparatus according to a comparative example.
FIG. 10 is a side view showing an electrode assembly manufactured by an electrode assembly manufacturing apparatus according to a comparative example.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Now, an electrode assembly manufacturing apparatus according to an embodiment of the present disclosure will be described.

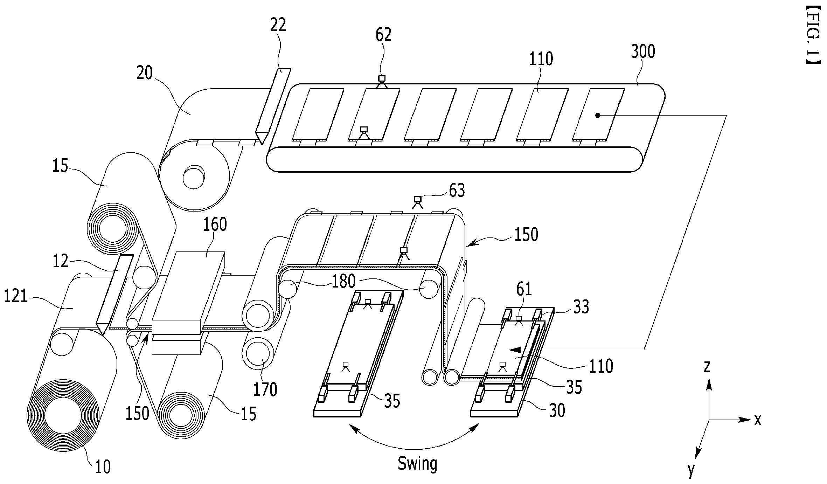

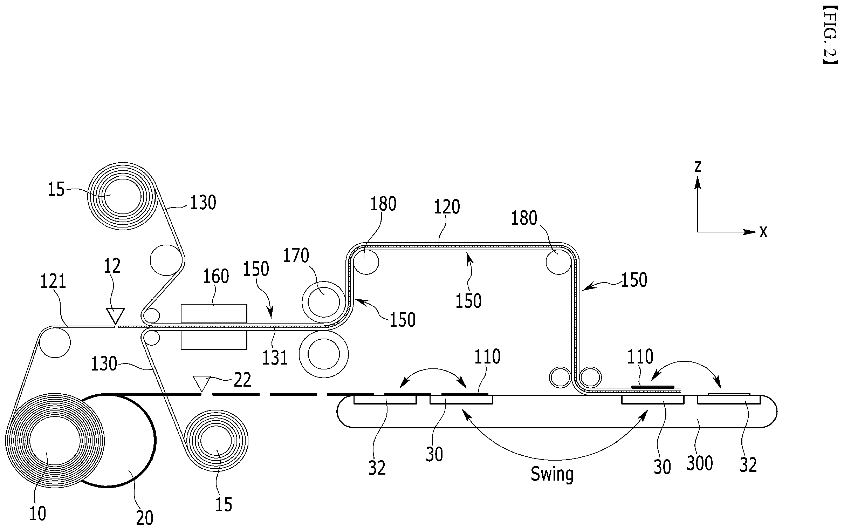

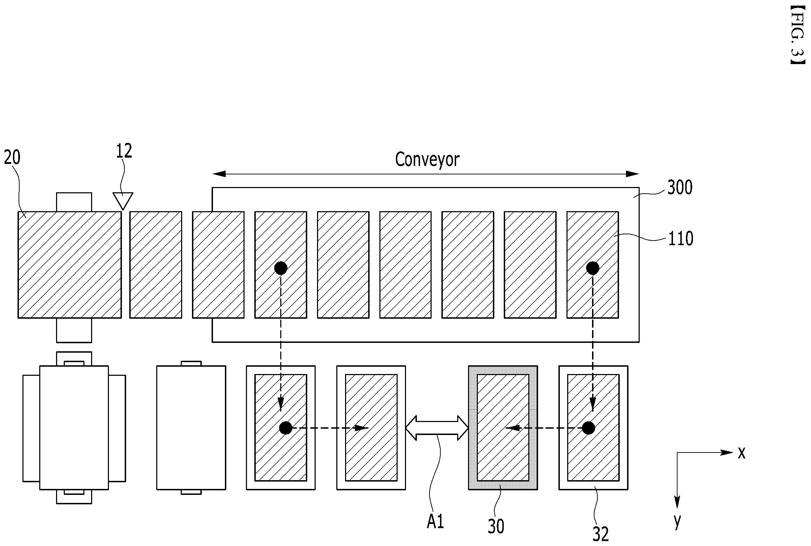

FIG. 1 is a perspective view showing an electrode assembly manufacturing apparatus according to an embodiment of the present disclosure. FIG. 2 is a front view of the electrode assembly manufacturing apparatus of FIG. 1. FIG. 3 is a plan view showing the moving state of the positive electrode piece 110 in the electrode assembly manufacturing apparatus of FIG. 1.

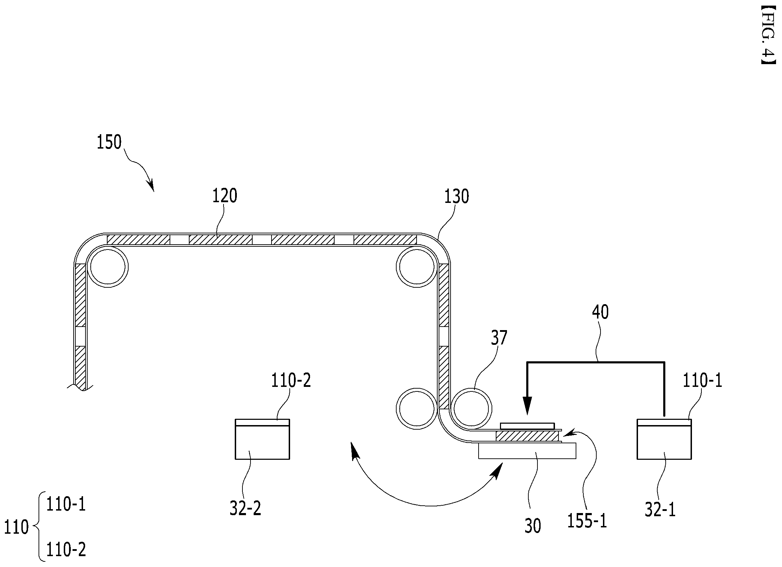

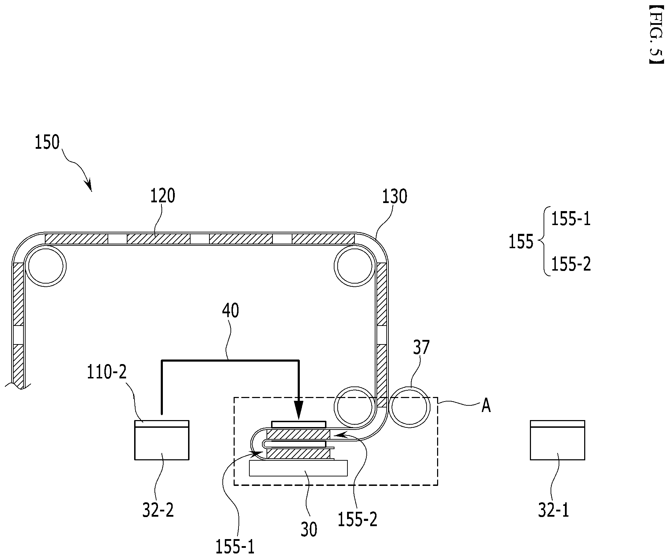

Referring to FIGS. 1 and 2, an electrode assembly manufacturing apparatus according to the present embodiment may comprise first and second separator supply units 15 that supplies a first separator sheet and a second separator sheet, respectively, a first electrode supply unit 10 that supplies a first electrode sheet, lamination units 160 and 170 that form an electrode-separator assembly sheet, a second electrode supply unit 20 that supplies a second electrode sheet, a stack unit 30 on which an electrode assembly is seated, and a holding unit 40 (see FIGS. 4 and 5) that moves a positive electrode piece 110 to the stack unit 30.

The first and second separator supply units 15 are disposed at the upper part and the lower part, respectively, and a path along which the plurality of first electrode pieces 120 provided from the first electrode supply unit 10 moves can be formed between them. The first electrode supply unit 10 may include an unwinding roll that releases the first electrode sheet, and may further include a first cutting part 12 that cuts the first electrode sheet to form a plurality of first electrode pieces 120. The first electrode piece 120 may be a negative electrode.

The second electrode supply unit 20 may include an unwinding roll that releases the second electrode sheet, and may further include a second cutting part 22 that cuts the second electrode sheet to form a plurality of second electrode pieces 110. The second electrode piece 110 may be a positive electrode. The electrode assembly manufacturing apparatus according to the present embodiment may further include a transmission unit 300 that transmits the plurality of second electrode pieces 110. The electrode assembly manufacturing apparatus according to the present embodiment may further include an alignment unit 62 that aligns the plurality of second electrode pieces 110 moving through the transmission unit 300.

The lamination unit according to the present embodiment may comprises a heater 160 and a pressurizing device 170 so that the first and second separator sheets 130 (see FIGS. 4 and 5) and the first electrode piece 120 interposed between them are joined to each other. The first and second separator sheets and the first electrode piece 120 may be joined to each other by a lamination unit to form the first electrode-separator assembly sheet 150.

The electrode assembly manufacturing apparatus according to the present embodiment may further comprise a moving unit 180 that moves the first electrode-separator assembly sheet 150 in order to laminate the plurality of first electrode-separator assemblies 155 (see FIGS. 4 and 5) formed in the lamination unit on the stack unit 30. The moving unit 180 may be at least one roller. The moving unit 180 may change the moving direction of the first electrode-separator assembly sheet 150. For example, as shown in FIGS. 1 and 2, the first electrode-separator assembly sheet 150 that has passed through the pressurizing device 170 moves in the z-axis direction and then can change its direction in the x-axis direction by the moving unit 180. Further, the first electrode-separator assembly sheet 150, which had been moved in the x-axis direction, may change its direction in the -z-axis direction while passing through the moving unit 180 once again. At this time, a gap vision 63 for measuring the width or gap of the first electrode-separator assembly sheet 150 may be added.

The electrode assembly manufacturing apparatus according to the present embodiment includes a buffer table 32 on which the second electrode piece 110 located in the transmission unit 300 is temporarily seated before moving the second electrode piece 110 to the stack unit 30. The buffer table 32 comprises a first buffer table and a second buffer table, and the stack unit 30 is disposed between the first buffer table and the second buffer table, and thereby can move between the first buffer table and the second buffer table. The stack unit 30 may rotationally reciprocate between the first buffer table and the second buffer table. Further, the stack unit 30 can move on a straight line that forms the shortest distance between the first buffer table and the second buffer table when viewed in a plan view. For example, the stack unit 30 may reciprocate along the arrow Al shown in FIG. 3 .

The electrode assembly manufacturing apparatus according to the present embodiment may further comprise a stage 35 on which the stack unit 30 is seated. The stage 35 may be a table using a 3-axis motor, and may be used to adjust the alignment of the stack unit 30, and the like. At this time, a fixing member 33 is formed on the stage 35 to prevent the stack unit 30 from moving.

FIGS. 4 and 5 are side views showing the operation of the electrode assembly manufacturing apparatus of FIG. 1.

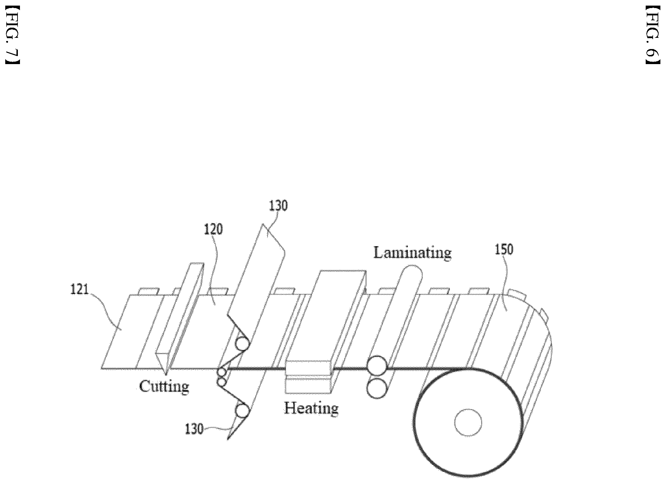

Referring to FIGS. 1, 4 and 5, the electrode assembly manufacturing apparatus according to this embodiment may comprise, as shown in FIG. 7, a first electrode supply unit 10 that supplies a first electrode-separator assembly sheet 150 including two sheet-like separators 130, and a plurality of first electrode pieces 120 continuously located between the inner side surfaces of the separators 130 facing each other, a second electrode supply unit 20 that supplies a second electrode piece 110 laminated on the outer side surface of the separator 130 of the first electrode-separator assembly sheet 150 supplied from the first electrode supply unit 10, a stack unit 30 on which an electrode assembly 100 is seated, wherein the electrode assembly 100 is formed by laminating the first electrode-separator assembly 155, which is part of the first electrode-separator assembly sheet 150, and the second electrode piece 110, and a holding unit 40 that holds the second electrode piece 110 from the second electrode supply unit 20 and moves the second electrode piece 110 toward the stack unit 30. At this time, the first electrode may be a negative electrode, and the second electrode may be a positive electrode.

The plurality of second electrode pieces 110 provided via the second electrode supply unit 20 may move in one direction in the state of being aligned via the transmission unit 300 or while being aligned by the alignment unit 62 or the like. Before moving the second electrode piece 110 located in the transfer unit 300 to the stack unit 30, the second electrode piece 110 may be temporarily seated on the buffer table 32.

The buffer table 32 includes a first buffer table and a second buffer table, and the stack unit 30 is disposed between the first buffer table and the second buffer table and can reciprocate between the first buffer table and the second buffer table. According to the present embodiment, the second electrode piece 110 is supplied from the buffer tables 32 formed in plural numbers, thereby being able to improve the productivity of the electrode assembly 100 of the electrode assembly manufacturing apparatus according to the present embodiment.

At this time, the stack unit 30 may be formed between the buffer tables 32 adjacent to each other in the plurality of buffer tables 32. As an example, as shown in FIGS. 4 and 5, the stack unit 30 is formed between the first and second buffer tables 32, one each on the left and right sides, and may move and/or reciprocate between the first buffer table and the second buffer table. Specifically, the stack unit 30 may move and/or reciprocate on a straight line that forms the shortest distance between the first buffer table 32 and the second buffer table 32 when viewed in a plan view.

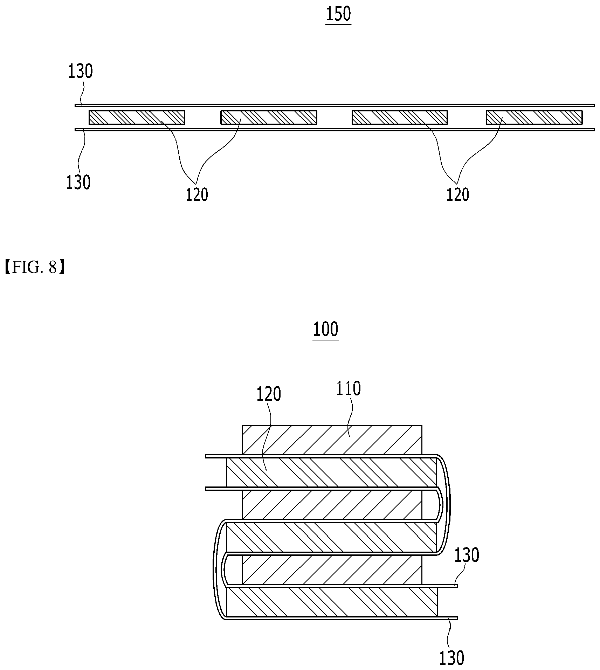

The holding unit 40 can move between the buffer table 32 and the stack unit 30. Specifically, the holding unit 40 may hold the second electrode piece 110 from the buffer table 32 adjacent to the holding unit 40, move the held second electrode piece 110 to the stack unit 30, and laminate it on the stack unit 30. At this time, at the moment when the second electrode piece 110 is laminated on the electrode assembly 100 (see FIG. 8) of the stack unit 30 by the holding unit 40, the first electrode-separator assembly 155 may be disposed on the uppermost part of the electrode assembly 100 (see FIG. 8) of the stack unit 30. Therefore, the second electrode piece 110 may be laminated so as to be located on the outer side surface of the separator 130 of the first electrode-separator assembly 155.

Referring to FIGS. 4 and 5, the stack unit 30 may laminate the first electrode-separator assembly 155 on the stack unit 30 or on the second electrode piece 110, while moving between the first buffer table 32-1 on the right side and the second buffer table 32-2 on the left side.

That is, as mentioned above, the stack unit 30 can receive transmission of the second electrode piece 110 from the holding unit 40 while moving between the first buffer table 32-1 and the second buffer table 32-2. Before receiving transmission of the second electrode piece 110, the 1-1 electrode-separator assembly 155-1 may be seated on the stack unit 30. The 1-1 electrode-separator assembly 155-1 may be seated on the stack unit 30, and the 2-1 electrode piece 110-1 may be laminated on the 1-1 electrode-separator assembly 155. At this time, the stack unit 30 which has received transmission of the held 2-1 electrode piece 110-1 can move in order to laminate the 1-2 electrode-separator assembly 155-2 of FIG. 5 on the 2-1 electrode piece 110-1. The 1-1 electrode-separator assembly 155-1 and the 1-2 electrode-separator assembly 155-2 are portions of the first electrode-separator assembly sheet 150 that passes through a switching roller 37. The 1-1 electrode-separator assembly 155-1 and the 1-2 electrode-separator assembly 155-2 may be portions through which the first electrode-separator assembly sheet 150 sequentially passes through the switching roller 37.

More specifically, the stack unit 30 may be moved to be adjacent to the second buffer table 32-2 that is located farther from the stack unit 30 among the plurality of buffer tables 32 in order to laminate the 1-2 electrode-separator assembly 155-2. Further, the stack unit 30 is moved to be adjacent to the second buffer table 32-2, thereby making it possible to located the 1-2 electrode-separator assembly 155-2 on the uppermost 2-1 electrode piece 110-1 of the stack unit 30.

As an example, referring to FIG. 5, the stack unit 30 is located closer to the second buffer table 32-2 located on the left side, and can receive supply of the 2-2 electrode piece 110-2 therefrom. Subsequently, the stack unit 30 may be moved so as to be located adjacent to the first buffer table 32-1 that is located farther from the stack unit 30 among the buffer tables 32 in order to laminate a new 1-1 electrode-separator assembly 155-1 again. That is, it can be moved similarly to the position of the stack unit 30 in FIG. 4. Further, the stack unit 30 is moved to be adjacent to the first buffer table 32-1, thereby making it possible to locate the 1-1 electrode-separator assembly 155-1 on the uppermost 2-2 electrode piece 110-2 of the stack unit 30. By repeating such a process, the first electrode-separator assembly 155 and the second electrode piece 110 can be alternately laminated to form an electrode assembly.

Therefore, the electrode assembly manufacturing apparatus according to the present embodiment continuously supplies a plurality of first electrode-separator assemblies 155 from the first electrode-separator assembly sheet 150, and laminates the second electrode piece 110 on the first electrode-separator assembly 155 in both directions while the stack unit 30 rotationally reciprocates, thereby being able to improve the productivity as compared to a conventional electrode assembly manufacturing apparatus.

Next, the first electrode-separator assembly supplied to the electrode assembly manufacturing apparatus according to the present embodiment, and the electrode assembly manufactured by the electrode assembly manufacturing apparatus according to the present embodiment will be described.

FIG. 6 is a diagram illustrating a method of manufacturing a negative electrode-separator assembly that is inserted in an electrode assembly manufacturing apparatus according to an embodiment of the present disclosure. FIG. 7 is a side view showing a first electrode-separator assembly manufactured through the manufacturing method of FIG. 6. FIG. 8 is a side view showing the electrode assembly of a section A of FIG. 5, which is an electrode assembly manufactured by an electrode assembly manufacturing apparatus according to an embodiment of the present disclosure.

The first electrode-separator assembly 155 that is inserted into the electrode assembly manufacturing apparatus according to an embodiment of the present disclosure may be formed by laminating a long sheet-like separator 130 and a first electrode piece 120.

At this time, referring to FIG. 6, in the process of forming the first electrode-separator assembly 155, the long sheet-like first electrode sheet 121 is inserted into the first electrode-separator assembly manufacturing apparatus, and then the first electrode sheet 121 may be cut to form the first electrode piece 120, but is not limited thereto, and the first electrode piece 120 itself may be inserted.

On the other hand, the separator 130 may be provided as two long sheet-like separators 130.

Therefore, as shown in FIG. 7, the first electrode-separator assembly sheet 150 may be formed in a state where a plurality of first electrode pieces 120 are interposed between the inner side surfaces of the two separators 130 facing each other. At this time, the plurality of first electrode pieces 120 interposed between the separators 130 may be disposed at intervals from each other in the longitudinal direction (the horizontal direction in FIG. 7) of the separator 130.

In addition, in order to form the first electrode-separator assembly sheet 150, a heating and laminating process is further performed as shown in FIG. 6, thereby being able to form a final first electrode-separator assembly sheet 150. Therefore, the separator 130 and the first electrode piece 120 may be joined to each other, and make it possible to form a more robust first electrode-separator assembly sheet 150 and electrode assembly 100. The laminating process may be a pressurizing process.

Further, the electrode assembly 100 of FIG. 8 manufactured by supplying the above-mentioned first electrode-separator assembly 155 to the electrode assembly manufacturing apparatus may be manufactured in such a manner that the first electrode-separator assembly 155 and the second electrode piece 110 are folded and laminated by a zigzag laminating method.

Specifically, referring to FIG. 8, the electrode assembly 100 can be manufactured by folding the connecting portions formed on the separator 130 in mutually opposite directions. Here, the connecting portion may be a portion where the second electrode piece 110 or the first electrode piece 120 is not disposed in the electrode assembly 100, and only the separator 130 is present.

In particular, referring to FIGS. 4 and 5, the stack unit 30 of the electrode assembly manufacturing apparatus according to the present embodiment laminates the first electrode-separator assembly 155 while moving between the first buffer table 32-1 and the second buffer table 32-2. At this time, while a direction of movement from a position adjacent to the first buffer table 32-1 to a position adjacent to the second buffer table 32-2, and a direction of movement from a position adjacent to the second buffer table 32-2 to a position adjacent to the first buffer table 32-1 are being opposite to each other, the connecting portions formed on the separator 130 of the electrode assembly 100 may be folded in mutually opposite directions.

According to the embodiments described above, it has been described that the first electrode piece is a negative electrode piece, and a negative electrode-separator assembly in which such negative electrode piece is laminated to a separator is alternately laminated with the positive electrode piece, but an embodiment in which the positive electrode-separator assembly in which the positive electrode piece is laminated to the separator is alternately laminated with the negative piece can also be available.

However, for the case of an electrode assembly where the negative electrode is designed to be larger than the positive electrode during the production process, an embodiment in which a negative electrode-separator assembly in which the negative electrode piece is laminated onto the separator is supplied may be more preferable in consideration of the process margin.

Next, an electrode assembly manufacturing apparatus according to a comparative example will be described.

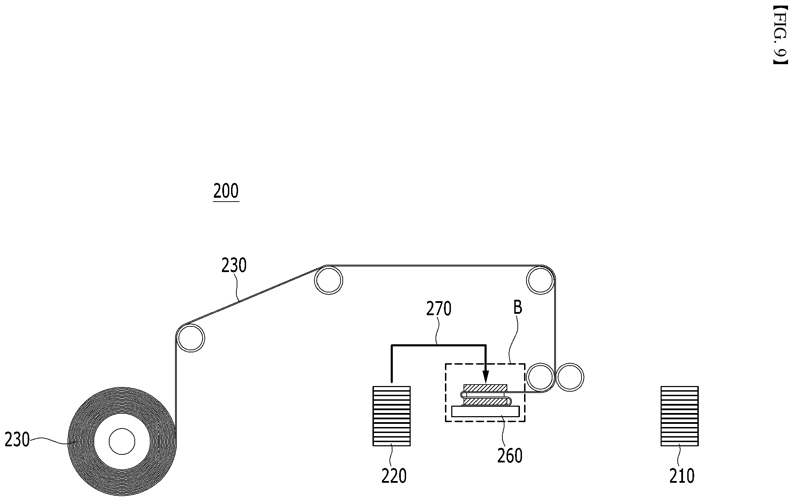

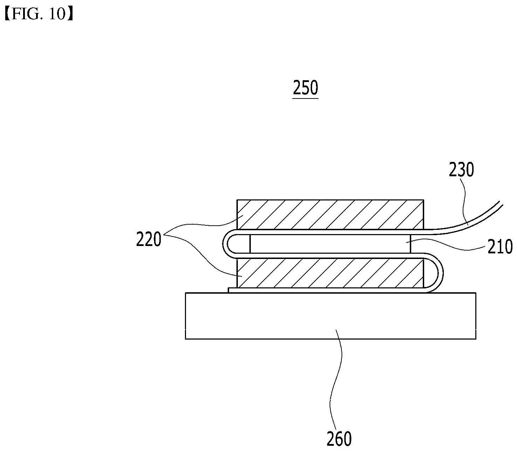

FIG. 9 is a side view of an electrode assembly manufacturing apparatus according to a comparative example. FIG. 10 is a side view showing an electrode assembly manufactured by an electrode assembly manufacturing apparatus according to a comparative example.

Referring to FIGS. 9 and 10, the electrode assembly manufacturing apparatus 200 according to a comparative example may include both a positive electrode supply unit and a negative electrode supply unit into which the separator sheet 230 is inserted and the positive electrode piece 210 and the negative electrode piece 220 are supplied.

Therefore, the stack unit 260 can move between the positive electrode supply unit and the negative electrode supply unit and receive transmission of the positive electrode piece 210 and the negative electrode piece 220 from the holding unit 270 to form the electrode assembly 250.

Further, as the electrode assembly 250 manufactured by the electrode assembly manufacturing apparatus 200 according to the comparative example includes a single sheet separator 230, it can have a structure of an electrode assembly 250 in which the positive electrode piece 210 or the negative electrode piece 220 is disposed around a single separator sheet 230, rather than a structure in which the negative electrode piece 120 is located between two separators 130.

At this time, the conventional electrode assembly manufacturing apparatus 200 has limits in improving production speed because the positive electrode piece 210 and the negative electrode piece 220 must be laminated on the separator 230, respectively.

On the other hand, the electrode assembly manufacturing apparatus according to an embodiment of the present disclosure laminates the second electrode piece 110 after inserting the first electrode-separator assembly 155, which makes it possible to secure productivity that is twice as high as that of the conventional electrode assembly manufacturing apparatus 200.

Next, the manufacturing method of an electrode assembly according to another embodiment of the present disclosure will be described.

The manufacturing method of an electrode assembly according to the present embodiment comprises a step of forming a first electrode-separator assembly sheet 150 that includes two sheet-like separators 130, and a plurality of first electrode pieces 120 continuously located between inner side surfaces of the separators 130 facing each other; a step of disposing a first electrode-separator assembly 155, which is part of the first electrode-separator assembly sheet 150, in a stack unit 30; a step of laminating a second electrode piece 110 on the outer side surface of the separator 130 of the first electrode-separator assembly 155 disposed in the stack unit 30; and a step of rotationally moving the stack unit 30 to laminate the first electrode-separator assembly 155 on the laminated second electrode piece 110. The first electrode-separator assembly 155 may include a 1-1 electrode-separator assembly 155-1 and a 1-2 electrode-separator assembly 155-2, and the second electrode piece 110 may include a 2-1 electrode piece 110-1 and a 2-2 electrode piece 110-2. At this time, the electrode assembly manufacturing method according to the present embodiment may comprise a step of laminating the 2-2 electrode piece 110-2 on one surface of the 1-2 electrode separator assembly 155-2 that is located on the opposite side to the surface of the 1-2 electrode separator assembly 155-2 facing the 2-1 electrode piece 110-1.

At this time, the step of laminating a second electrode piece 110 on the outer side surface of the separator 130 of the first electrode-separator assembly 155 disposed in the stack unit 30 may be a step in which a holding unit 40 holds a second electrode piece 110 from a buffer table 32, and the held second electrode piece 110 is laminated on the first electrode-separator assembly 155 disposed in the stack unit 30.

More specifically, the stack unit 30 is located between the first buffer table 32-1 and the second buffer table 32-2, and can move and reciprocate between them, as mentioned above. Therefore, the step of moving the stack unit 30 to laminate the first electrode-separator assembly 155 on the laminated second electrode piece 110 may be a step in which the stack unit 30 moves between the first buffer table 32-1 and the second buffer table 32-2, and the first electrode-separator assembly 155 may be laminated on the uppermost second electrode piece 110 of the stack unit 30.

Thereby, the manufacturing method of an electrode assembly according to the present embodiment forms the first electrode-separator assembly sheet 150, receives supply of the second electrode pieces 110 from a plurality of buffer tables 32, and laminates them, thereby being able to provide a manufacturing method of an electrode assembly having further improved productivity.

The invention has been described in detail with reference to preferred embodiments thereof. However, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

10: first electrode supply unit
20: second electrode supply unit
30: stack unit
32: buffer table
37: switching roller
40: holding unit
62: alignment unit
100: electrode assembly
110: second electrode piece
120: first electrode piece
130: separator
150: first electrode-separator assembly sheet
180: moving unit
300: transmission unit

## Claims

1. An electrode assembly manufacturing apparatus comprising:
a first separator supply unit that supplies a first separator sheet,
a second separator supply unit that supplies a second separator sheet,
a first electrode supply unit that supplies a plurality of first electrode pieces so as to be located between the first separator sheet and the second separator sheet,
a lamination unit that forms a first electrode-separator assembly including a plurality of first electrode pieces located between the first separator sheet and the second separator sheet,
a second electrode supply unit that supplies a plurality of second electrode pieces laminated so as to be located on the outer side surface of the separator of the first electrode-separator assembly,
a stack unit on which an electrode assembly formed by laminating the first electrode-separator assembly and the second electrode piece is seated, and
a holding unit that holds the second electrode piece and moves the second electrode piece to the stack unit.

2. The electrode assembly manufacturing apparatus as claimed in claim 1,
further comprising a moving unit that moves the first electrode-separator assembly in order to laminate the first electrode-separator assembly formed in the lamination unit onto the stack unit.

3. The electrode assembly manufacturing apparatus as claimed in claim 2, wherein:
the moving unit further comprises at least one roller that changes the moving direction of the first electrode-separator assembly.

4. The electrode assembly manufacturing apparatus as claimed in claim 1,
further comprising a transmission unit that moves the plurality of second electrode pieces supplied from the second electrode supply unit.

5. The electrode assembly manufacturing apparatus as claimed in claim 4,
further comprising an alignment unit that aligns a plurality of second electrode pieces moving through the transmission unit.

6. The electrode assembly manufacturing apparatus as claimed in claim 4,
further comprising a buffer table on which the second electrode piece located in the transmission unit is temporarily seated before moving the second electrode piece to the stack unit.

7. The electrode assembly manufacturing apparatus as claimed in claim 6, wherein:
the buffer table comprises a first buffer table and a second buffer table, and
the stack unit is disposed between the first buffer table and the second buffer table.

8. The electrode assembly manufacturing apparatus as claimed in claim 7, wherein:
the stack unit moves between the first buffer table and the second buffer table.

9. The electrode assembly manufacturing apparatus as claimed in claim 8, wherein:
the stack unit moves on a straight line that forms the shortest distance between the first buffer table and the second buffer table when viewed in a plan view.

10. The electrode assembly manufacturing apparatus as claimed in claim 6, wherein:
the holding unit holds the second electrode piece seated on the buffer table while moving between the buffer table and the stack unit, and moves it to the stack unit.

11. The electrode assembly manufacturing apparatus as claimed in claim 10, wherein:
the stack unit that has received transmission of the held second electrode piece moves in order to laminate the first electrode-separator assembly onto the stack unit.

12. The electrode assembly manufacturing apparatus as claimed in claim 11, wherein:
the stack unit moves to be adjacent to the buffer table that is located farther from the stack unit among the buffer tables including a first buffer table and a second buffer table in order to laminate the first electrode-separator assembly, and
the stack unit locates the first electrode-separator assembly on the uppermost second electrode piece of the stack unit by moving to be adjacent to the buffer table.

13. The electrode assembly manufacturing apparatus as claimed in claim 1, wherein:
the first electrode is a negative electrode, and the second electrode is a positive electrode.

14. A manufacturing method of an electrode assembly, comprising the steps of:
forming a first electrode-separator assembly sheet that includes two sheet-like separators, and a plurality of first electrode pieces continuously located between inner side surfaces of the sheet-like separators facing each other;
disposing a 1-1 electrode-separator assembly, which is part of the first electrode-separator assembly sheet, in a stack unit;
laminating a 2-1 electrode piece on the outer side surface of the separator of the 1-1 electrode-separator assembly disposed in the stack unit;
rotationally moving the stack unit to laminate a 1-2 electrode-separator assembly on the laminated 2-1 electrode piece; and
laminating a 2-2 electrode piece on one surface of the 1-2 electrode separator assembly that is located on the opposite side to the surface of the 1-2 electrode separator assembly facing the 2-1 electrode piece.

15. The manufacturing method of an electrode assembly as claimed in claim 14, wherein:
the step of laminating the 2-1 electrode piece on the outer side surface of the separator of the 1-1 electrode-separator assembly disposed in the stack unit comprises,
temporarily seating the second electrode piece supplied from the second electrode supply unit on a buffer table before moving the second electrode piece to the stack unit, and
laminating the second electrode piece, in which a holding unit is temporarily seated on the buffer table, on the 1-1 electrode-separator assembly.

16. The manufacturing method of an electrode assembly as claimed in claim 14, wherein:
the buffer table comprises a first buffer table and a second buffer table, and
the stack unit is located between the first buffer table and the second buffer table.

17. The manufacturing method of an electrode assembly as claimed in claim 16, wherein:
the step of rotationally moving the stack unit to laminate the 1-2 electrode-separator assembly on the laminated 2-1 electrode piece is,
a step in which the stack unit moves between the first buffer table and the second buffer table, and the 1-2 electrode-separator assembly is stacked on the uppermost 2-1 electrode piece of the stack unit.

18. The manufacturing method of an electrode assembly as claimed in claim 14, wherein:
the 1-1 electrode-separator assembly and the 1-2 electrode-separator assembly are connected to each other in a zigzag shape during the process of being disposed in the stack unit, and
the 1-1 electrode-separator assembly and the 1-2 electrode-separator assembly are in a state in which the plurality of first electrode pieces are laminated between the sheet-like separators.
